(19) Europäisches Patentamt
European Patent Office
Office européen des brevets

(11) Publication number: 0 337 133 A1

(12) # EUROPEAN PATENT APPLICATION

(21) Application number: 89104492.7

(51) Int. Cl.4: C08G 73/06

(22) Date of filing: 14.03.89

(30) Priority: 14.03.88 IT 4100488

(43) Date of publication of application:
18.10.89 Bulletin 89/42

(84) Designated Contracting States:
DE ES FR GB NL SE

(71) Applicant: HIMONT ITALIA S.r.l.
Foro Buonaparte, 31
I-20100 Milan(IT)

(72) Inventor: Fornasier, Roberto, Dr.-Chem.
15, Via Ballario
I-28100 Novara(IT)
Inventor: Tornatore, Massimo, Dr.-Chem.
13, Corso Torino
I-28100 Novara(IT)
Inventor: Chapoy, Larry Lawrence, PH.D
60, Via Davicini
I-20040 Lesa Novara(IT)

(74) Representative: Zumstein, Fritz, Dr. et al
Zumstein & Klingseisen Patentanwälte
Bräuhausstrasse 4
D-8000 München 2(DE)

(54) **Liquid-crystalline, thermotropic polymers of di-s-triazines.**

(57) Polymers obtained from the polycondensation of at least one di-s-triazine of general formula:

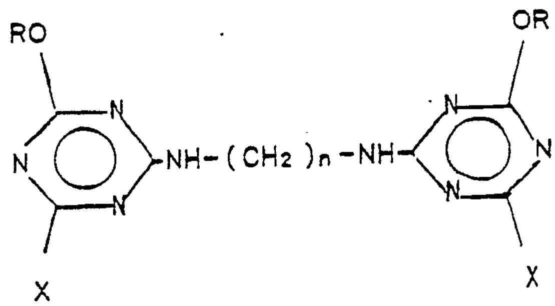

(1)

wherein:
R represents a linear or branched alkyl radical containing from 1 to 5 carbon atoms,
X represents a halogen, and
n is an integer comprised within the range of from 5 to 30,
with at least one other copolymerisable monomer, capable of yielding a liquid-crystalline, thermotropic polymer.

EP 0 337 133 A1

## Liquid-Crystalline, Thermotropic Polymers of Di-S-Triazines

The present invention relates to liquid-crystalline, thermotropic polymers of di-s-triazines.

More particularly, the present invention relates to easily processable liquid-crystalline, thermotropic polymers of di-s-triazines, having their mesogen group in their backbone chain.

From the relevant technical literature, the polymers of di-s-triazines are known; in European patent application N. 53,775, for example, light stabilizers for polyolefins, or for acrylic polymers are disclosed, which are obtained by means of the polycondensation of a diamine and a di-s-triazinic derivative.

This latter product is constituted by two triazinic rings linked by means of a diamine, and substituted in their 2-position with a halogen, and in their 4-position with a group selected from among halogens, or phenyl, alkoxy, amino radical, and so forth.

The present Applicant has found now that di-s-triazinic derivatives, containing two triazinic rings substituted in their 2- or 4-positions with particular alkoxy groups, can originate, when are copolymerized together with suitable monomers, to liquid-crystalline, thermotropic polymers.

It is known that the liquid-crystalline, thermotropic polymers have the property of maintaining, when they are in their molten state, or in their softened state, and within well defined temperature ranges, an organized, or ordered, arrangement of the polymeric chains, which is maintained by the polymer in the solid state, thus securing to the polymer special physical-mechanical properties, such as a high elastic modulus, a high ultimate tensile strength, and, in general, the typical properties of a fibre-reinforced polymer.

Therefore, the object of the present invention are polymers obtained from the polycondensation of at least one di-s-triazine of general formula:

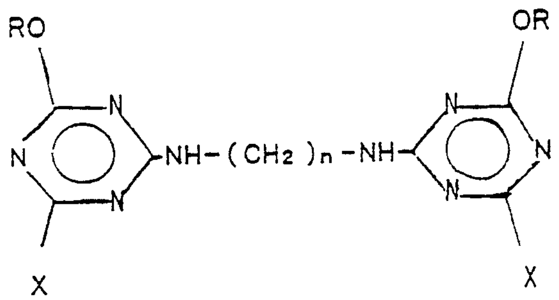

(1)

wherein:

R represents a linear or branched alkyl radical containing from 1 to 5 carbon atoms,

X represents a halogen such as chlorine or bromine, and

n is an integer comprised within the range of from 5 to 30, and preferably from 6 to 12

with at least one other copolymerisable monomer, capable of yielding a liquid-crystalline, thermotropic polymer.

Examples of di-s-triazines having the general formula (1) are; N,N′-bis-(2-chloro-4-methoxy-1,3,5-triazinyl)-1,12-diamino-dodecane, N,N′-bis-(2-chloro-4-ethoxy-1,3,5-triazinyl)-1,12-diamino-dodecane, N,N′-bis-(2-chloro-4-methoxy-1,3,5-triazinyl)-hexamethylene-diamine, N,N′-bis-(2-chloro-4-methoxy-1,3,5-triazinyl)-1,10-diaminodecane, N,N′-bis-(2-chloro-4-ethoxy-1,3,5-triazinyl)-hexamethylene-diamine, and so forth.

The copolymerizable monomers are preferably selected from among diamines and diphenols, and, in particular, from the group consisting of the diamines having the general formula:

$H_2N-R_1-NH_2$ (2)

wherein:

$R_1$ represents an alkyl radical, a cycloalkyl radical, or an alkyl-aryl radical of from 1 to 20 carbon atoms, and the group consisting of the diphenols having the general formula:

HO-Ar-OH (3)

wherein:

Ar represents an aryl radical containing from 6 to 18 carbon atoms, possibly substituted with halogens or with alkyl groups, aryl groups, or alkyl-aryl groups of from 1 to 20 carbon atoms.

As such copolymerizable monomers, also the ($C_4$-$C_{15}$)-heterocyclic compounds, formed by cycloaliphatic diamines containing at least one of their two reactive nitrogen atoms in the ring of the cycloaliphatic radical, can be used.

Examples of copolymerizable monomers are: 1,2-diamino-ethane, 1,6-diamino-hexane, 1,12-diamino-dodecane, piperazine, p-phenylene-diamine, m-phenylene-diamine, 4,4′-diamino-diphenyl, hydroquinone, methyl-hydroquinone, phenyl-hydroquinone, (1-phenyl-ethyl)-hydroquinone, (2-phenyl-isopropyl)-hydroquinone, 4,4′-di-hydroxy-diphenyl, 2,6-di-hydroxy-naphthalene, 1,5-di-hydroxy-naphthalene, and so forth.

The polymers according to the present invention have a structure of nematic-glass type, as one can verify by means of the optical-microscopy analysis under polarized light, and from the X-ray diffraction spectrum, wherein only a broad peak at $2\vartheta = 22$, typical of the amorphous materials, is found; and an intrinsic viscosity, measured in formic acid at 30 °C, and at a concentration of 0.25 g/dl, generally comprised within the range of from 0.5 to 10 dl/g.

The glass transition temperature can vary within wide limits, according to the composition of the polymer, and of the polymerization degree; such a temperature is generally comprised within the range of from 50 to 300 °C.

The liquid-crystalline polymers of the present invention can be used for obtaining shaped bodies, which can be prepared by means of the technologies of fabrication customarily used for the thermoplastic polymers, such as, e.g., injection moulding or extrusion; they can be processed in order to yield films of fibres, can be used as matrices for composite materials containing inorganic fibres or fillers, and can be used in the preparation of blends with other polymers.

The polymers according to the present invention can be obtained by means of traditional techniques, by causing the above-mentioned monomers to react in equimolecular ratios, under the usual conditions of the polycondensation reactions.

Such a reaction takes place in the presence of a high-boiling solvent having a good solvating power for the reactants, such as, e.g., the aromatic solvents, and the chlorinated, both aliphatic and aromatic, solvents.

Examples of such solvents are xylene, trichlorobenzene, and so forth.

The polycondensation temperature is comprised within the range of from 100 to 250 °C, and the reaction is carried out in the presence of a base, such as sodium carbonate or pyridine, possibly under a stream or an overhead blanket, or nitrogen.

At the end of the reaction, the polymer can be recovered by means of known techniques, such as solvent evaporation, precipitation, and so forth.

The di-s-triazinic derivatives of general formula (1) are disclosed in Italian patent application N. 21,369/A87, and can be obtained by means of the reaction of a 2,4-dichloro-6-alkoxy-1,3,5-triazine with an alkylidene-diamine according to such conditions as disclosed in European patent application N. 53,775.

In order to better understand the present invention, and to practice it, hereinunder some illustrative, non-limitative examples are reported.

## Example 1

To an Erlenmeyer flask of 100 ml of capacity, equipped with a refluxing condenser, 2.57 g (5 mmol) of N,N′-bis-(2-chloro-4-ethoxy-1,3,5-triazinyl)-1,12-diamino-dodecane, 1.00 g (5 mmol) of 1,12-diamino-dodecane, 50 ml of xylene and 8 g of anhydrous sodium carbonate are charged under a slight nitrogen stream.

The whole mass is kept with magnetic stirring, and under an overhead nitrogen blanket for 60 hours at 130 °C.

The reaction mass is allowed to cool, still under an overhead nitrogen blanket, and with stirring. The reaction mixture is poured into 200 ml of acetone, and a precipitate is obtained, which is then filtered off.

The so obtained polymer is washed twice with acetone, is dissolved in 100 ml of formic acid in order to remove the inorganic salts formed and the excess of sodium carbonate, is precipitated again in 600 ml of water, filtered and washed twice with water.

The end product is dried under vacuum for 16 hours at 130 °C.

The dried polymer has a glass transition temperature ($T_g$) of 93 °C (as determined by means of the DSC -Differential Scanning Calorimeter, at a temperature increase rate of 20 °C/minute), and an intrinsic viscosity of 8.70 dl/g (as measured at the temperature of 30 °C in formic acid).

The X-ray diffraction spectrum under reflexion (Cu $K\alpha$ , Ni filter) shows that the polymer has a

completely amorphous structure.

The polymer in the molten state is endowed with optical anisotropy when observed under the crossed-polarizers microscope.

## Examples 2 -7

By operating with the same modalities as of Example 1, other polymers are prepared, by starting from a monomer having the general formula:

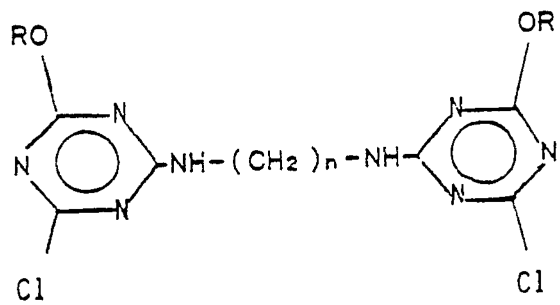

(1)

wherein R and n have the values reported in the following Table, and from the comonomers:

A: $H_2N-(CH_2)_{12}-NH_2$

B: 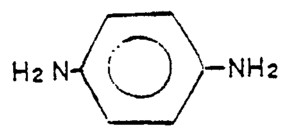

The characteristics of the corresponding polymers are reported in the following Table.

| Examples | R | n | $\eta$ | $T_g$ | Comonomer |
|---|---|---|---|---|---|
| 2 | $CH_3$ | 6 | insoluble | 55 | A |
| 3 | $C_2H_5$ | 6 | 5.24 | 70 | A |
| 4 | $C_2H_5$ | 12 | 8.70 | 55 | A |
| 5 | $C_2H_5$ | 6 | 4.57 | 146 | B |
| 6 | $CH_3$ | 12 | 4.19 | 130 | B |
| 7 | $C_2H_5$ | 12 | 2.00 | 124 | B |

$\eta$ : intrinsic viscosity (dl/g)

$T_g$ : glass transition temperature (° C)

## Claims

1. Polymers obtained by means of the polycondensation of at least one di-s-triazine of general formula:

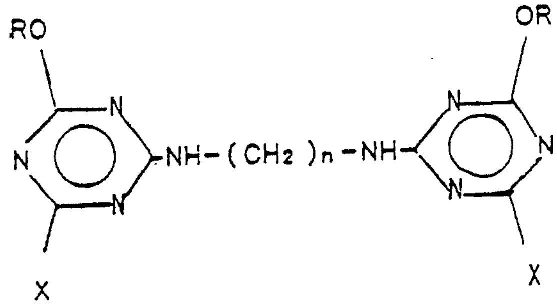

(1)

wherein:
R represents a linear or branched alkyl radical containing from 1 to 5 carbon atoms,
X represents a halogen such as chlorine or bromine, and
n is an integer comprised within the range of from 5 to 30,
with at least one other copolymerisable monomer, capable of yielding a liquid-crystalline, thermotropic polymer.

2. Polymers according to claim 1, wherein the di-S-triazines having the general formula (1) are selected from N,N′-bis-(2-chloro-4-methoxy-1,3,5-triazinyl)-1,12-diamino-dodecane, N,N′-bis-(2-chloro-4-ethoxy-1,3,5-triazinyl)-1,12-diamino-dodecane, N,N′-bis-(2-chloro-4-methoxy-1,3,5-triazinyl)-hexamethylene-diamine, N,N′-bis-(2-chloro-4-methoxy-1,3,5-triazinyl)-1,10-diaminodecane, N,N′-bis-(2-chloro-4-ethoxy-1,3,5-triazinyl)-hexamethylene-diamine, and so forth.

3. Polymers according to claim 1 or 2, wherein the copolymerizable monomers are preferably selected from among the diamines having the general formula:
$H_2N-R_1-NH_2$ (2)
wherein:
$R_1$ represents an alkyl radical, a cycloalkyl radical, or an alkyl-aryl radical of from 1 to 20 carbon atoms;
the diphenols having the general formula:
HO-Ar-OH (3)
wherein:
Ar represents an aryl radical containing from 6 to 18 carbon atoms, possibly substituted with halogens or with alkyl groups, aryl groups, or alkyl-aryl groups of from 1 to 20 carbon atoms; and
the ($C_2$-$C_{15}$)-cycloaliphatic diamines containing at least one of their two reactive nitrogen atoms in the ring of the cycloaliphatic radical.

4. Polymers according to any of the preceding claims, wherein the copolymerizable monomers are selected from among 1,2-diamino-ethane, 1,6-diamino-hexane, 1,12-diamino-dodecane, piperazine, p-phenylene-diamine, m-phenylene-diamine, 4,4′-diamino-diphenyl, hydroquinone, methyl-hydroquinone, phenyl-hydroquinone, (1-phenyl-ethyl)-hydroquinone, (2-phenyl-isopropyl)-hydroquinone, 4,4′di-hydroxy-diphenyl, 2,6-di-hydroxy-naphthalene, 1,5-di-hydroxy-naphthalene.

5. Polymers according to any of the preceding claims, having an intrinsic viscosity, measured in formic acid at 30 °C, at the concentration of 0.25 g/dl, comprised within the range of from 0.5 to 10 dl/g. and a glass transition temperature comprised within the range of from 50 to 300 °C.

6. Use of the polymers obtained according to any of the preceding claims, for obtaining fibres, films, bodies fabricated by injection or extrusion, as matrices for composite materials containing inorganic fibres or fillers, and as component of blends with other polymers.

European Patent Office

# EUROPEAN SEARCH REPORT

Application Number

EP 89 10 4492

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | EP-A-0 053 775 (HOECHST)<br>* claims *<br>--- | 1-4 | C 08 G 73/06 |
| A | US-A-4 412 020 (F. LOFFELMAN et al.)<br>* claims 1,7; column 4, lines 6-66 *<br>--- | 1-4 | |
| A | US-A-3 301 797 (A. DRUCKER et al.)<br>* claims 5,6 *<br>--- | 1-6 | |
| A | GB-A- 905 609 (MICROCELL)<br>* page 8, lines 21-60 *<br>--- | 1-6 | |
| P,A | EP-A-0 300 753 (MONTEDISON)<br>* claims *; & IT - A - 2136987 (Cat. D)<br>----- | 1 | |
| | | | TECHNICAL FIELDS SEARCHED (Int. Cl.4) |
| | | | C 08 G 73/00 |

The present search report has been drawn up for all claims

| Place of search | Date of completion of the search | Examiner |
|---|---|---|
| BERLIN | 07-06-1989 | BOEKER R.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)